# EUROPEAN PATENT APPLICATION

(11) **EP 0 570 859 A1**
(43) Date of publication of application: **24.11.1993**
(21) Application number: 93107881.0
(22) Date of filing: 14.05.1993
(51) Int. Cl.: B66D 5/14, F16D 55/2255, F16D 59/02

(54) **Caliper for braking rotating masses, particularly winches, hoists and the like**

(30) Priority: 20.05.1992 IT MI921211
(71) Applicant: Galbiati, Paolo, I-20035 Lissone, Province of Milano (IT)
(72) Inventor: Galbiati, Paolo, I-20035 Lissone, Province of Milano (IT)
(74) Representative: Modiano, Guido, Dr.-Ing.

(57) **Abstract**

Caliper for braking rotating masses having a pair of arms (1,2) which are pivoted to a supporting frame (4) in a median portion and which support, at one end thereof, braking pads (10) for acting on a disk which is connected to the mass to be braked, and which support, at the other end thereof, cam follower rollers (20) which interact with a cam-like portion (21) of an actuation lever (22) which is pivoted to the supporting frame and is connected to a rod (40) which is associated with one end of a rocker-like control lever (50); an elastic clamping element (60) and a controlled opening element (70), which acts in contrast with the elastic clamping element, act on the other end of the control lever.

## Description

The present invention relates to a caliper for braking rotating masses in general and particularly winches, hoists and the like.

Two basic types of calipers are currently commercially available: one features direct hydraulic actuation, and the other one has arms which are pivoted on fixed structures and act on the braking pads.

The first type of caliper generally comprises a pair of oppositely arranged pistons to which pads acting on the opposite faces of the disk are connected. The pistons are loaded in order to apply the braking action by virtue of cup-shaped springs which act on said pistons.

This kind of solution has the drawback that the thrust is applied to the braking pads, by means of a piston, by pre-loading cup-shaped springs, which in addition to being difficult to compress to the same extent in both systems do not automatically compensate the loss of compression due to the wear of the brake shoes, thus causing a progressive decrease in the braking force unless pre-loading is restored manually.

It should be furthermore noted that if the two half-calipers do not float parallel to the rotation axis of the disk, any difference in the compression of the springs can cause dangerous thrusts in directions which are normal to said disk.

The second known type of caliper can be of the simple type, i.e. of the type which closes by means of a spiral or disk-shaped spring acting to the same extent on both arms and which opens by means of a wedge-like system which has the purpose of opening out the levers so as to space the pads from the disk; the wedge, in fact, by moving, spaces the two levers apart, thus freeing the disk from the braking pads.

A more complicated embodiment is provided with automatic play recovery, but is very bulky, especially in a vertical direction, and it entails difficulty in stabilizing the position of the levers which support the braking pads, when said levers are open, so that one of the two pads almost always rubs against the rotating disk even when the caliper is in open position. Furthermore, the system for transmitting the forces on the pad supporting levers is of the cantilever type and produces moments which are assuredly negative for the general structure of the caliper.

A principal aim of the present invention is indeed to eliminate the drawbacks described above by providing a caliper for braking rotating masses in general and particularly winches, hoists and the like, in which the elastic clamping action is not applied by elastic elements which act directly on the individual arms.

Within the scope of the above aim, a particular object of the invention is to provide a caliper which allows to easily and automatically compensate the wear of the braking pads, furthermore obtaining a uniform distribution of the braking action on the two oppositely arranged pads, and to also allow the floating of the pads in a direction which is normal to the disk, so that any non-uniform wear of the braking shoes is compensated by this floating, which allows execution of the task assigned to the caliper without any problem.

Another object of the present invention is to provide a caliper which is very compact, thus simplifying and facilitating its placement during design.

A further object of the present invention is to provide a caliper which, by virtue of its particular constructive characteristics, is capable of giving the greatest assurances of reliability and safety in use.

Another object of the present invention is to provide a caliper which can be easily obtained starting from commonly commercially available elements and materials and is furthermore competitive from a merely economical point of view.

With the foregoing and other objects in view, there is provided, in accordance with the invention, a caliper for braking rotating masses, in particular winches, hoists and the like, which is characterized in that it comprises a pair of arms being pivoted to a supporting frame in a median portion, and supporting, at one end thereof, braking pads for acting on a disk connected to the mass to be braked and, at another end thereof, cam follower means for interacting with a cam-like portion of an actuation lever pivoted to said supporting frame and connected to a rod associated with one end of a rocker-like control lever, an elastic clamping element and a controlled opening element, which acts in contrast with said elastic clamping element, acting on another end of said control lever.

Further characteristics and advantages of the present invention will become more readily apparent from the following detailed description of a preferred but not exclusive embodiment thereof, illustrated only by way of non-limitative example in the accompanying drawings, wherein:
figure 1 is a schematic and partially sectional lateral elevation view of the caliper according to the invention;
figure 2 is a plan view of the arms in the brake closure position, with the rocker lever and the elements associated therewith removed;
figure 3 is a view of the arms in the condition in which the brake is open;
figure 4 is a view of the detail of the connection of the rod;
figure 5 is a view of a device for automatically restoring plays;
figure 6 is a sectional view of an integrated unit for opening and closing the calipers; and
figure 7 is a view of the integrated unit associated with the caliper.

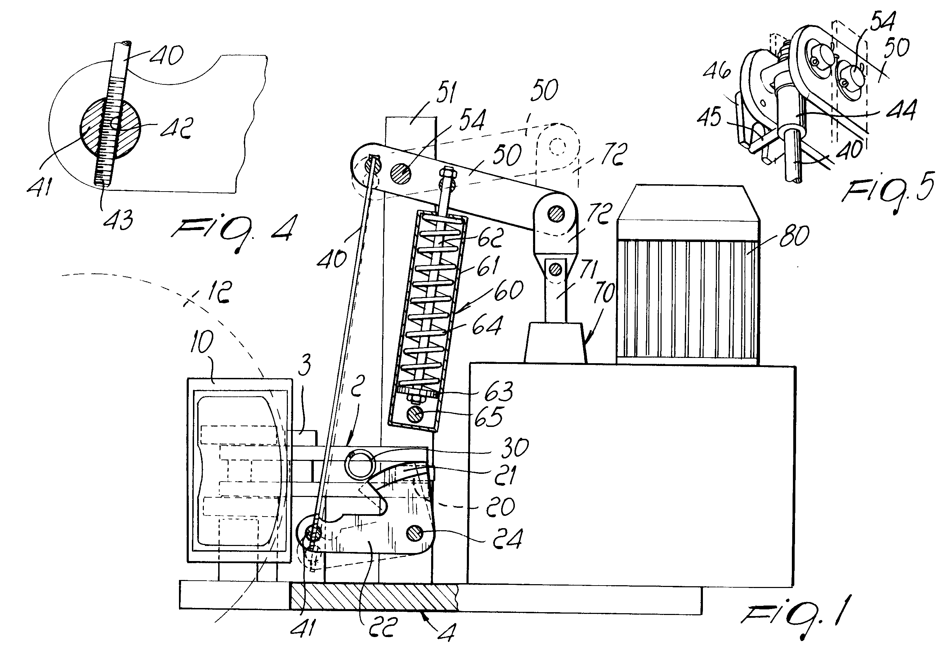

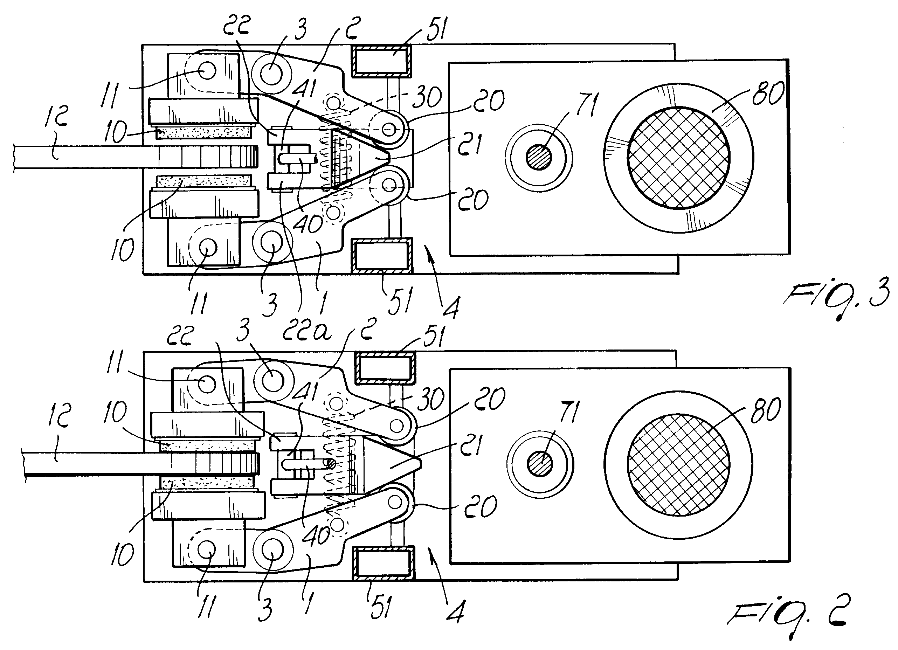

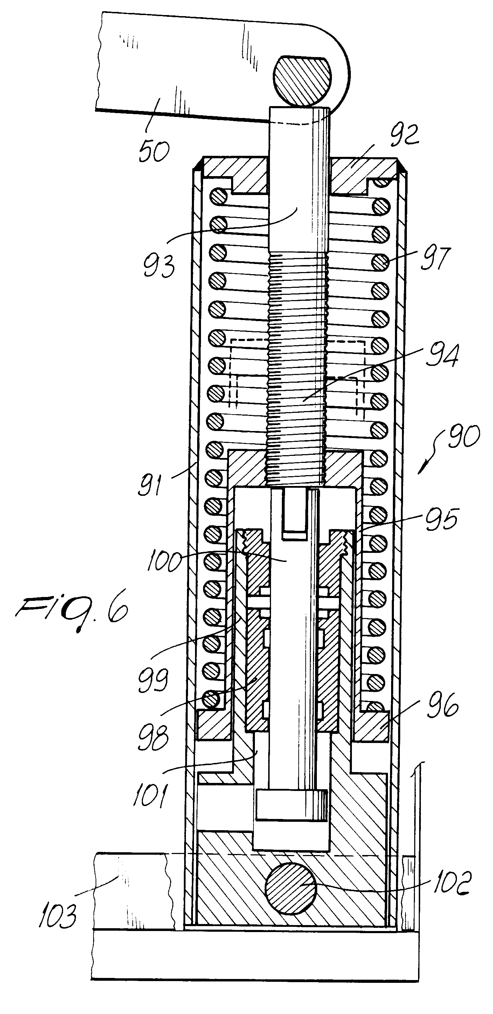

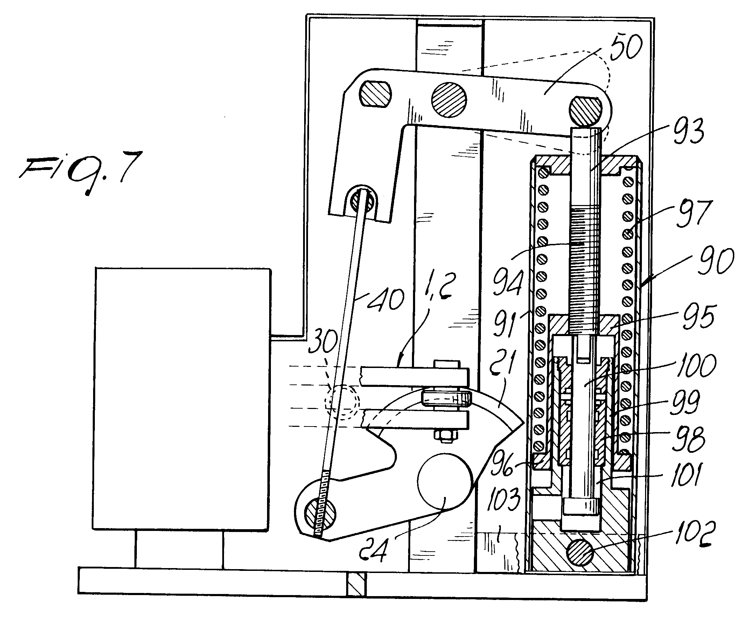

With reference to the above figures 1 to 5, the caliper for braking rotating masses in general and particularly winches, hoists and the like comprises a pair of arms, designated by the reference numerals 1 and 2, which have a mutually symmetrical configuration and are pivoted at 3 to posts or pivots which protrude from a supporting frame which is generally designated by the reference numeral 4.

The arms support, at one of their ends, braking pads 10 of a per se known type, which are oscillatably mounted in order to adapt during braking, about a vertical pivot designated by the reference numeral 11.

The pads 10 are provided at the opposite faces of a disk 12 which is connected to the mass to be braked.

At the other end, the arms 1 and 2 support cam follower means constituted for example by rollers 20 which act by contact on a cam-like portion 21 which is wedge-shaped and forms a circular portion centered in the pivoting point of an actuation lever 22 which is advantageously angled and is pivoted at 24, at its vertex region, to the base frame 4.

There are also elastic return means for opening the arms, which are constituted by a spring 30 which acts between the arms 1 and 2 in the portion comprised between the point for pivoting to the fixed frame and the cam-follower rollers 20.

A rod 40 is connected on the free end of the actuation lever 22 and engages a pawl 41 which is rotatably supported by arms 22a formed at the end of the lever 22. The pawl is provided with a threaded through hole 42 through which the rod passes; the useful length of said rod can be adjusted by virtue of the presence of a threaded portion 43 thereof.

At its upper end, the rod 40 engages an end of a rocker-like lever 50 which is pivoted in a median portion to posts 51 which extend from the supporting frame and are joined by a cross-member 54 which in practice forms the horizontal pivoting axis for the rocker-like lever 50.

A device for automatically restoring plays can be applied to the end of the rod 40 which is connected to the rocker-like lever 50; said device keeps the braking torque value and the caliper opening stroke unchanged, avoiding dangerous changes in the calibration values and the need for frequent maintenance. This per se known device is schematically shown in figure 5 and substantially comprises a free wheel 44 which is applied to the rod 40 and is provided with a radial wing 45 which engages a fork 46 provided on the rocker-like lever 50.

The movement of the fork on the lever for engagement with the free wheel generates a rotary motion on the rod 40 only when the stroke of the brake exceeds a preset value due to the wear of the friction pads; in practice, this movement restores the gap between the disk and the pads.

On the arm which is opposite to the rod connecting point with respect to the pivoting point, the rocker-like lever 50 is connected to an elastic clamping element, generally designated by the reference numeral 60, which is preferably but not necessarily constituted by a cylindrical body 61 inside which there is a traction element 62 provided with a flat disk 63 the position whereof can be adjusted in order to calibrate the elastic means, which are constituted by a compression spring 64 which acts between the flat disk and the end of the cylinder.

The cylinder is advantageously oscillatably freely pivoted with respect to the fixed frame and is preferably connected to a lower cross-member 65 fitted between the posts 51.

A controlled opening element acts on the same end of the rocker-like lever with respect to the elastic element 60 and is constituted for example by a fluid-actuated cylinder 70 the stem 71 whereof is connected to the end of the rocker-like lever by means of a link 72 and acts in practice in contrast with the elastic element 60; obviously, the controlled opening element may be replaced with another electrohydraulic or hydraulic or pneumatic or cable-operated system.

The drawing shows a motor 80 which injects pressurized fluid into the cylinder 70, but obviously the pressurized fluid may be injected with other means.

With the described arrangement, in inactive conditions, i.e. when the cylinder 70 is not actuated, the action of the elastic element 60 causes an oscillation of the rocker-like lever 50 which applies traction to the rod 40, causing an oscillation of the actuation lever 22 in the direction which causes the insertion of the wedge-shaped cam between the cam-follower rollers 20, with the consequent corresponding rotation of the arms 1 and 2 so that the braking pads clamp onto the disk, furthermore providing automatic play restoring which occurs when the stroke of the lever 50 increases beyond the preset limits due to the wear of the friction pads.

In these conditions, the braking action is perfectly balanced, since the elastic means which perform clamping are provided on the rocker-like lever, and a uniform clamping action is consequently applied to the two arms; this clamping action can be considerably increased by virtue of the favorable lever arms which form in the connecting kinematic system.

In order to open the caliper, the cylinder 70 is actuated; by overcoming the elastic return action of the elastic element 60, said cylinder causes the oscillation of the rocker-like lever in the opposite direction, with a consequent rotation of the lever 22 in the opposite direction with respect to the preceding case; this rotation in practice causes the wedge-shaped portion 21 to retract from the region comprised between the two cam-follower rollers 20.

In these conditions, the elastic return action applied by the spring 30 causes the ends of the arms which support the pads to move mutually apart, consequently spacing the pads from the disk.

According to what is shown in figures 6 and 7, there is an integrated opening and closure unit which in practice performs, by means of a single element, the function of the elastic clamping element 60 and the function of the controlled opening element; said integrated unit, generally designated by the reference numeral 90, has the advantage that it allows a significant reduction in application spaces, thus reducing the bulk occupied by the brake.

The integrated unit 90, as more clearly shown in figure 6, comprises a cylindrical external container 91 which is closed at its end by a base plate 92 and inside which an actuation link 93 is slideable; said actuation link is pivoted to the lever 50 at its end which is outside the container 91.

At its internal end, the actuation link 93 has a threaded portion 94 with which a cup-shaped element 95 engages; said cup-shaped element is provided with a flange 96 which acts as abutment for a compression spring 97 which acts against the base plate 92 at its other end.

By varying the position of the cup-shaped element 95 with respect to the actuation link 93, by virtue of the engagement with the thread 94, it is possible to vary the pre-loading force of the spring 97, consequently varying the braking force of the brake.

In the above described integrated unit, the force of the pre-loaded spring 97 pulls the cup-shaped element 95 downward, with reference to the drawing, and consequently pulls downward the actuation link 93 which, by acting on the rocker-like lever 50, closes the brake with the preset force.

In order to open the brake it is necessary to apply a force which overcomes the force applied by the spring 97.

For this purpose there is a guiding element 98 fixed in a cylinder 99 around which the cup-shaped element 95 is arranged.

A stem 100 is slideable within the element 98 and is fixed to the lower end of the actuation link 93.

The stem 100 is actuated by injecting pressurized fluid in the injection chamber 101 located at the internal end of the cylinder 99, so that a pushing action is applied to the stem 100 and overcomes the elastic contrast provided by the spring 97 and pushes the actuation link 93, acting on the rocker-like lever 50 so as to open the brake calipers.

The action applied by the stem 100 always occurs in the same manner, independently of the state of compression of the spring 97, and thus independently of the position of the cup-shaped element 95, which is located in a preset position with respect to the actuation link 93.

The cylindrical container 91 is fitted, by means of a pivot 102, so that it can oscillate with respect to two shoulders 103 which are part of the fixed structure of the device.

With this arrangement, the space occupied by the braking caliper is reduced significantly, since both the caliper closure element and the caliper opening element are integrated in a single element.

From what has been described above it can thus be seen that the caliper according to the present invention achieves the intended aim and objects and in particular the fact is stressed that a caliper is provided which allows to easily and rapidly compensate wear and to perform the required recoveries by exploiting the possibility of adjusting the useful length of the rod.

Furthermore, since there is an elastic element which does not act directly on the arms which support the pads but acts on the rocker-like lever, it is possible to obtain a clamping action which is always constant and equal for both pads; this clamping action can furthermore be increased considerably by virtue of the presence of a kinematic system which forms lever arms which are favorable to the clamping action; furthermore, calibration of the elastic element is considerably facilitated by virtue of the large stroke which it allows.

Furthermore, with the described caliper one obtains a significant compaction of the dimensions and a structural simplification of the assembly.

The invention thus conceived is susceptible to numerous modifications and variations, all of which are within the scope of the inventive concept.

All the details may furthermore be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Caliper for braking rotating masses, in particular winches, hoists and the like, characterized in that it comprises a pair of arms (1,2) being pivoted to a supporting frame (4) in a median portion and supporting, at one end thereof, braking pads (10) for acting on a disk (12) connected to the mass to be braked and, at another end thereof, cam follower means (20) for interacting with a cam-like portion (21) of an actuation lever (22) pivoted to said supporting frame and connected to a rod (40) associated with one end of a rocker-like control lever (50), an elastic clamping element (60) and a controlled opening element (70), which acts in contrast with said elastic clamping element, acting on another end of said control lever.

2. Caliper according to claim 1, characterized in that it comprises elastic means for opening the arms, constituted by a spring (30) acting between said arms in the portion comprised between the point for pivoting to the supporting frame and said cam-follower means.

3. Caliper according to the preceding claims, characterized in that said cam-follower means are constituted by rollers (20) rotatably supported at an end of said arms.

4. Caliper according to one or more of the preceding claims, characterized in that said actuation rod comprises means (41-43) for adjusting its useful length.

5. Caliper according to claim 4, characterized in that said means for adjusting the useful length of said rod comprise at least one threaded portion (43) which is formed by said rod and engages a threaded through hole (42) provided on a pawl (41) which is rotatably supported at the end of said actuation lever.

6. Caliper according to one or more of the preceding claims, characterized in that said rocker-like control lever is pivoted, in a median portion, to posts extending rigidly from said supporting frame, said posts being joined by a cross-member (54) which forms the pivoting axis for said rocker-like lever, said axis being arranged substantially at right angles to the oscillation axis of said actuation lever.

7. Caliper according to one or more of the preceding claims, characterized in that it comprises means (44-46) for automatically restoring plays, said means being interposed between said rod and said rocker-like lever.

8. Caliper according to one or more of the preceding claims, characterized in that said elastic clamping element comprises a cylindrical body (61) pivoted, at one of its ends, to said supporting frame and internally slidingly accommodating a flat disk (63) associated with a link (62) which protrudes from said cylindrical body and is associated with said rocker-like lever, an adjustable compression spring (64) acting between said flat disk and the bottom of said cylindrical body.

9. Caliper according to one or more of the preceding claims, characterized in that said controlled opening element comprises a cylinder (70) the stem (71) whereof is associated, by means of a link (72), with said rocker-like lever, means (80) being furthermore provided for injecting pressurized fluid into said cylinder.

10. Caliper according to one or more of the preceding claims, characterized in that said cam-like portion (21) is substantially wedge-shaped and extends along a portion of a circumference which is centered in the pivoting point of said actuation lever.

11. Caliper according to one or more of the preceding claims, characterized in that it comprises an integrated unit (90) which provides said elastic clamping element and said controlled opening element, said integrated unit comprising a cylindrical external container (91) which is closed at one end by a base plate (92) through which an actuation link (93) is slideable, said actuation link being pivoted to said rocker-like control lever and having a threaded internal portion (94) upon which a cup-shaped element (95) is screwed, said cup-shaped element forming a flange (96) for the abutment of a compression spring (97) which acts on said base plate at its other end, there being also a cylinder (99) the stem whereof is rigidly associated with said link for the actuation of said actuation link in contrast with said compression spring.

12. Caliper according to claim 11, characterized in that said cylindrical external container is pivoted, together with said cylinder with stem, to a pair of oppositely arranged shoulders (103) formed by said fixed frame.
